## Europäisches Patentamt
## European Patent Office
## Office européen des brevets

(11) Veröffentlichungsnummer: **0 439 803 B1**

(12) **EUROPÄISCHE PATENTSCHRIFT**

(45) Veröffentlichungstag der Patentschrift: **22.02.95**

(21) Anmeldenummer: **90125042.3**

(22) Anmeldetag: **20.12.90**

Die Akte enthält technische Angaben, die nach dem Eingang der Anmeldung eingereicht wurden und die nicht in dieser Patentschrift enthalten sind.

(51) Int. Cl.⁶: **G01B 11/08**

(54) **Vorrichtung zur gleichzeitigen Messung der Positionen und der Durchmesser der Filamente eines Filamentbündels.**

(30) Priorität: **31.01.90 DE 4002744**

(43) Veröffentlichungstag der Anmeldung:
**07.08.91 Patentblatt 91/32**

(45) Bekanntmachung des Hinweises auf die
Patenterteilung:
**22.02.95 Patentblatt 95/08**

(84) Benannte Vertragsstaaten:
**AT BE CH DE DK ES FR GB GR IT LI LU NL SE**

(56) Entgegenhaltungen:
**WO-A-89/04946**
**CH-A- 565 990**
**DE-A- 2 165 693**
**FR-A- 2 129 389**

(73) Patentinhaber: **FRAUNHOFER-GESELLSCHAFT ZUR FÖRDERUNG DER ANGEWANDTEN FORSCHUNG E.V.**
**Leonrodstrasse 54**
**D-80636 München (DE)**

(72) Erfinder: **Hartrumpf, Matthias, Dipl.-Phys.**
**Binger Strasse 60**
**W-7500 Karlsruhe 21 (DE)**

EP 0 439 803 B1

**Beschreibung**

Die Erfindung betrifft eine Vorrichtung zur gleichzeitigen Messung der Positionen und der Durchmesser der Filamente eines Filamentbündels.

Aus der WO 89/04946 ist eine Methode und Einrichtung zur Messung des Durchmessers einzelner Fäden bekannt. Sie weist einen Laser auf, eine Optik zur Aufweitung des Lichtstrahles und eine weitere lichtsammelnde Optik und einen linearen CCD-Sensor. Unmittelbar vor dem Sensor, der im Brennpunkt der zweiten Optik angeordnet ist, befindet sich eine Maske zur Schwächung des Lichtmaximums im Brennpunkt. Eine Auswerteeinrichtung errechnet aus den von dem Sensor gemessenen Intensitäten des Brechungsbildes den Durchmesser des Fadens.

Aus der CH PS 565 990 ist weiterhin eine Anordnung zur Messung des Durchmessers eines Drahtes bekannt. Diese weist zusätzlich zu der oben beschriebenen Einrichtung ein Filter zur Angleichung der Intensitäten der Fraunhofer-Beugungsbilder auf, wodurch eine genauere Messung der Maxima der verschiedenen Beugungsordnungen (0.ter, 1.ter, 2.ter usw. Ordnung) ermöglicht wird.

Mit diesen bekannten Einrichtungen können jedoch nur einzelne Filamente gemessen werden.

Bisher wird die Position eines Filamentbündels vom Personal durch Augenschein wahrgenommen. Eine Messung der Durchmesser der einzelnen Filamente kann bislang nur durch Entnahme einer Probe und Offline Untersuchung, z.B. durch Vermessung eines Schnitts durch ein Probebündel mit Bildverarbeitungssystem erfolgen. Diese Offline Untersuchung ist dementsprechend arbeits- und zeitaufwendig.

Aufgabe der Erfindung ist es daher, eine Vorrichtung zu schaffen, die die gleichzeitige Messung der Position und des Durchmessers der Filamente eines Filamentbündels gestattet. Erfindungsgemäß wird dies durch die Vorrichtung nach Anspruch 1 gelöst. Vorteilhafte Ausgestaltungen der Erfindung sind in den Unteransprüchen angegeben.

Mit der Vorrichtung nach Anspruch 1 werden die Fäden einzeln abgetastet und können nunmehr gleichzeitig nach Position und Durchmesser vermessen werden.

Die erfindungsgemäße Ausblendung des nicht an den Filamenten gestreuten bzw. gebeugten Lichts erlaubt die Bestimmung der Positionen der einzelnen Filamente aus dem zeitlichen Abstand der detektierten Signalmaxima. Im Gegensatz zu den üblichen Laserscannersystemen können so auch die Positionen von Filamenten mit Durchmessern kleiner als die Halbwertsbreite des Laserstrahls mit hoher Genauigkeit vermessen werden.

Die Vermessung der intensitäten des Streulichts bzw. des an den Filamenten gebeuten Lichts in mindestens zwei unterschiedlichen Bereichen des Streu- bzw. Beugungsmusters erlaubt ferner die zusätzliche Vermessung der Durchmesser der einzelnen Fasern, unabhängig von der Intensität des beleuchtenden Lasers.

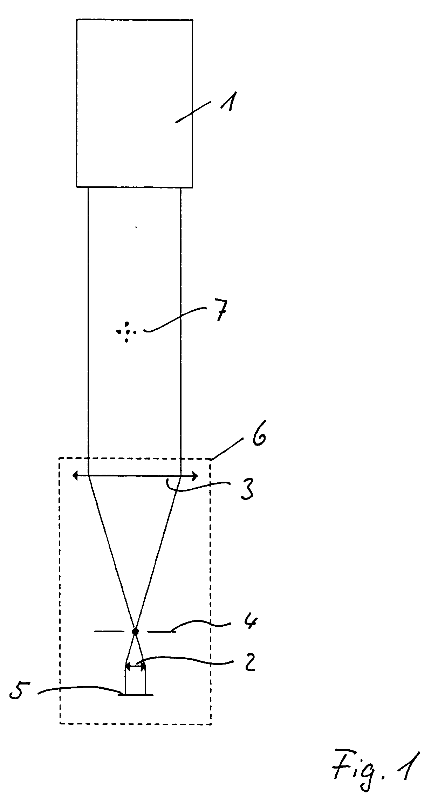

Im folgenden wird die Erfindung anhand der Figuren 1 - 5 erläutert:

Da Filamente, insbesondere Kunststofffäden, meistens durchsichtig sind oder/und kleiner als der Durchmesser des Lichtflecks eines Laserscanners, ist das Meßsignal- zu Umgebungssignalverhältnis bei der Messung des Schattens eines Filaments bzw. Filamentbündels sehr klein bzw. zu klein und kann daher als Meßhilfe für die Positionsbestimmung des Filaments nicht verwendet werden. Durch Filterung der O.ten Ordnung des Beugungs- bzw. Streumusters, d.h. Ausblendung des nicht auf die Filamente treffenden Lichts, erhält man nun ein wesentlich höheres Meßsignal- zu Beleuchtungssignalverhältnis. Dadurch wird in den meisten Fällen die Positionsbestimmung eines Filaments erst ermöglicht.

In Figur 1 wird zunächst eine Vorrichtung zur Positionsbestimmung gezeigt. Mit 1 ist ein Laserscanner bezeichnet. Zwischen dem Laserscanner und der Meßeinrichtung 6 ist das zu vermessende Filamentbündel 7 angeordnet, der Abstand beträgt ca. 0,2 - 2 m, das Filamentbündel liegt dabei etwa in der Mitte. In der eigentlichen Meßeinrichtung 6 sind dann zunächst eine Linse 3, ein Filter 4 und eine weitere Linse 2 und eine Detektoreinrichtung 5 angeordnet. Statt des Filters kann für die reine Positionsvermessung ein Doppelspalt verwendet werden. Die Linse 2 kann auch weggelassen werden. Dann muß jedoch der Detektor eine größere empfindliche Fläche besitzen.

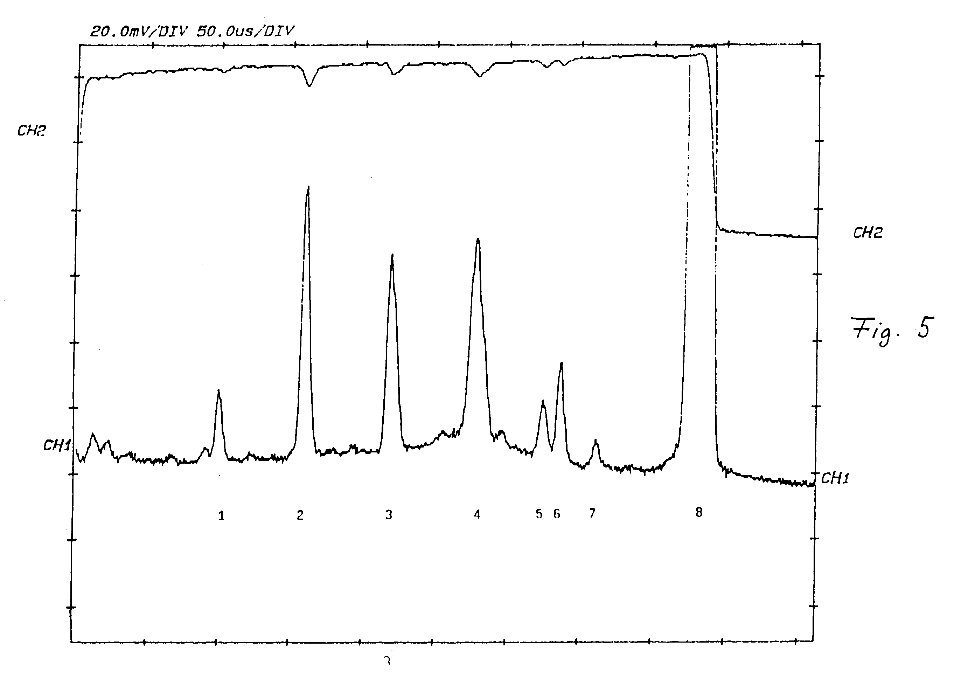

Fig. 5 zeigt Positionsmessungen mit der erfindungsgemäßen Vorrichtung, wobei Kanal 1 (CH 1) die erfindungsgemäße Vorrichtung zeigt und Kanal 2 (CH 2) eine Vorrichtung nach dem Stand der Technik.

Zur Verdeutlichung des neuen Prinzips der Durchmesservermessung wird zunächst von einem festen Laserstrahl ausgegangen, der genau auf ein Filament ausgerichtet ist.

Die folgende Formel

$$I \sim b' \sin^2 (\pi\, bx/\lambda\, f_1)/(\pi\, bx^2/\lambda\, f_1)^2$$

gibt die Intensität des an einem Filament gebeugten Lichtes in einem Punkt x in der Brennebene der Linse F1 wider. b' ist der Durchmesser des Fadens, $\lambda$ die Wellenlänge des Lichtes und $F_1$ die Brennweite der Linse 3. Nach dieser Formel kann der Durchmesser des Filaments berechnet werden, wenn ein Laserstrahl auf den Faden gerichtet wird und das übliche Meßverfahren der Vermessung der Abstände der Maxima bzw. Minima, z.B. mit einem Zeilen- bzw. Matrixsensor benutzt wird.

Die Formel gilt für b' $\gg \lambda$, d.h. für Fraunhofersche Beugung am Filament.

Falls b' nicht sehr viel größer als $\lambda$ ist, muß das aus der Streuung an dem Filament sich ergebende Streumuster in der Brennebene von Linse 3 berechnet werden.

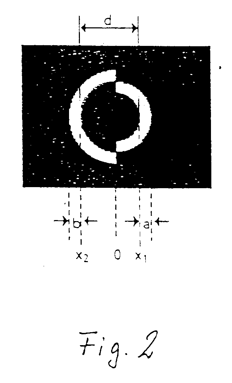

Bei einer nicht raumfesten Ausrichtung des Filaments zum Laserstrahl, muß der beleuchtende Strahl größer als der maximale Schwankungsbereich des Filaments sein. Befindet sich dann mehr als ein Filament im Meßfeld, erhält man eine Überlagerung der einzelnen Signalmuster. Es kann in einem solchen Fall bestensfalls ein Mittelwert der Durchmesser gemessen werden. Zur Vermessung der Einzelfilamente eines Bündels müssen deshalb die Filamente z.B. mit einem Laserscanner einzeln abgetastet werden. Dann ist aber das Zeitintervall innerhalb dessen der Laserstrahl genau auf ein einzelnes Filament gerichtet ist, in der Regel so kurz, daß das oben beschriebene Meßverfahren nicht angewendet werden kann. Die Vermessung der Durchmesser der einzelnen Filamente kann unabhängig von der Intensität des beleuchtenden Strahl erfolgen, wenn eine, aus mehreren Einzeldetektoren bestehende Detektoreinrichtung und ein besonderes Filter, wie es gem. Fig. 2 vorgeschlagen wird, verwendet wird:

Eine Auswertung des mit einer Fotodiode der Länge a gemessenen Signals

$$\int_{x_1}^{x1+a} I\,dx \sim b'^2 \int_{x1}^{x1+a} \sin^2(\pi\,bx/\lambda\,f_1)/(\pi\,bx/\lambda\,f_1)^2 dx$$

wenn der Laserstrahl genau auf das Filament gerichtet ist, ergibt in der Brennebene für einen bestimmten Weitenbereich von b' ein monoton mit b' veränderliches Signal, so daß aus Messungen des Integrals

$$\int_{x1}^{x1+a} I\,dx$$

b' berechnet werden kann, wobei bei Verwendung einer kreisförmigen Blende mit nachgeschalteter Fotodiode das Filament nicht senkrecht zur Lichtquelle und der Blendenöffnung liegen muß. Die Vermessung zweier Intensitäten, d.h. die Vermessung von

$$\int_{x1}^{x1+a} I\,dx \quad \text{und} \quad \int_{-x2}^{-x2-b} I\,dx$$

mit einer Vorrichtung nach den Figuren 1 und 2, gestattet eine Vermessung unabhängig von der Intensität des beleuchtenden Laserstrahls und die Detektion des Zeitpunkts, wenn der Laserstrahl genau auf das Filament gerichtet ist. Ist der Laserstrahl genau auf das Filament gerichtet, so ist bei entsprechender Dimensionierung des Filters das Signal

$$\int_{x1}^{x1+a} Idx \quad + \quad \int_{-x2}^{-x2-b} Idx$$

maximal.

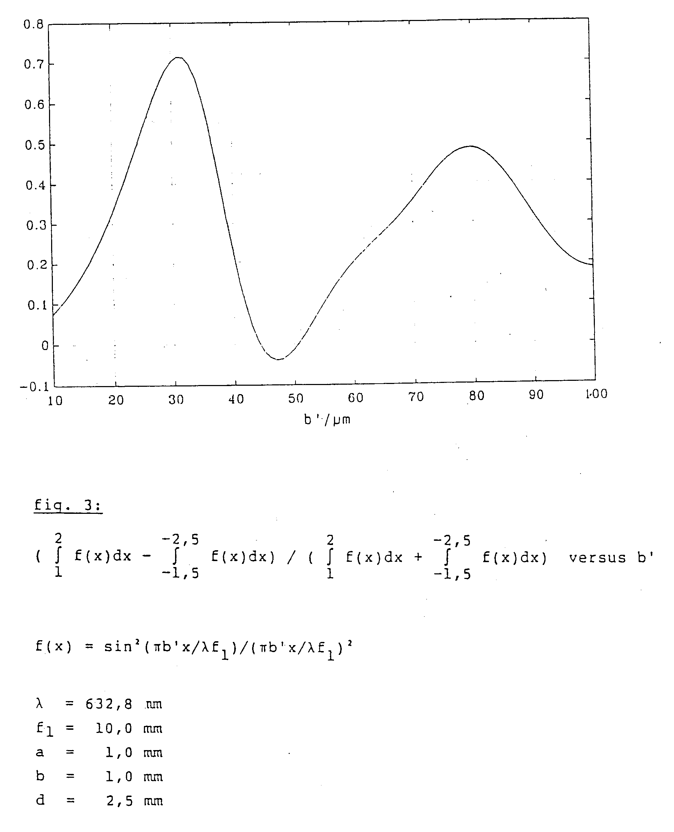

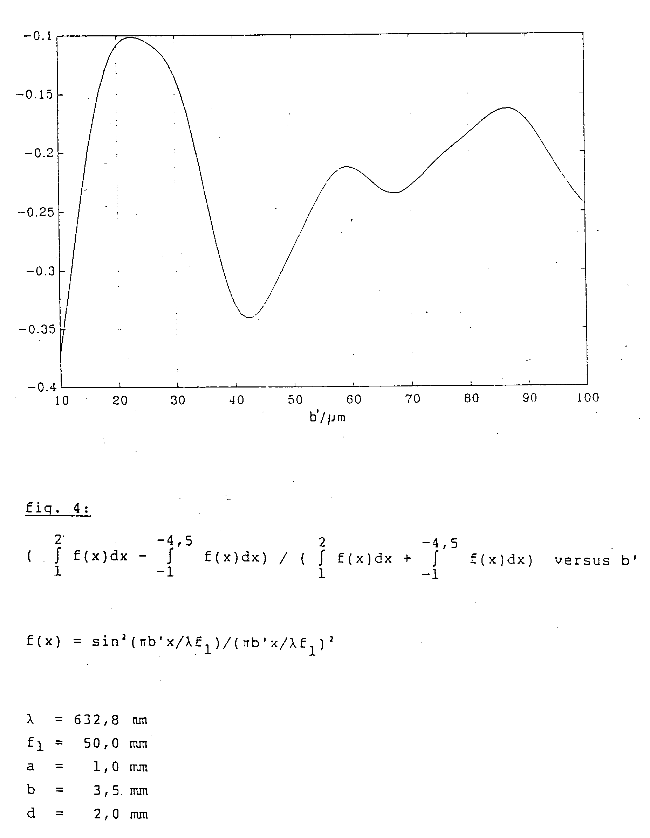

Figuren 3 und 4 zeigen numerische Auswertungen des Verhältnisses

$$( \int_{x1}^{x1+a} Idx \; - \; \int_{-x2}^{-x2-b} Idx \; ) \; / \; ( \int_{x1}^{x1+a} Idx \; + \; \int_{-x2}^{-x2-b} Idx) \; = \; F(b')$$

mit verschiedenen Parametern. Durch Optimierung der Parameter kann dann monotone Abhängigkeit der Funktion F(b') in einem weiten Bereich von b' erreicht werden. Es sind dann die Messungen der Filamentdurchmesser in diesem weiten Bereich b' unabhängig von der Intensität des beleuchtenden Strahls möglich.

Figur 2 zeigt nun einen speziellen Filter, wobei Kreisringausschnitte auf dem Filter so angeordnet sind, daß das Signal O.ter Ordnung ausgeblendet werden kann und die Signale n-ter bis k-ter bzw. m-ter bis l-ter Beugungsordnungen auf die Detektoren gelangen, die die oben berechneten Integrale über die Gesamtintensitäten des Beugungs- bzw. Streumusters in den genannten Beeichen vermessen.

Die Kreisringe können z.B. den Innendurchmesser x1, x2 und die Breiten a, b haben (s. Legende zu Fig. 3 und 4).

Figur 5 zeigt dann noch Positionsmessungen mit der erfindungsgemäßen Vorrichtung, wobei Kanal 1 (CH 1) die erfindungsgemäße Vorrichtung zeigt und Kanal 2 (CH 2) eine Vorrichtung nach dem Stand der Technik.

Damit ist gezeigt, daß mit der erfindungsgemäßen Vorrichtung eine automatische Bestimmung der Position und des Durchmessers von Filamenten von Filamentbündeln auf relativ einfache Weise mit einfachen technischen Mitteln zu erreichen ist.

**Patentansprüche**

1. Vorrichtung zur gleichzeitigen Messung der Positionen und der Durchmesser der Filamente eines Filamentbündels (7), wobei ein Laserscanner (1) zur Beleuchtung vor dem Filamentbündel (7) angeordnet ist und im Strahlengang hinter dem Filamentbündel (7) eine Optik (3), ein Filter (4) und eine Detektor- (5) und Auswerteeinrichtung angeordnet sind und das Filter (4) zur Ausblendung des nicht an den Filamenten gestreuten Lichtanteils in der Brennebene der Optik (3) angeordnet und nur für einzelne Ordnungen des Beugungsbildes durchlässig ausgebildet ist, die Detektoreinrichtung (5) aus einem Zeilen- bzw. einem Matrixsensor zur Messung der Intensitäten besteht, und die Auswerteeinrichtung zur Bestimmung der Positionen der Filamente aus den gemessenen zeitlichen Intensitätsverläufen und zur Bestimmung der Durchmesser der einzelnen Filamente aus den Verhältnissen der gemessenen Intensitäten ausgebildet ist.

2. Vorrichtung nach Anspruch 1,
   **dadurch gekennzeichnet**,
   daß das Filter (4) für zwei Kreisringe oder Kreisringabschnitte mit unterschiedlichen Radien $x_1$, $x_2$ durchlässig ausgebildet ist.

3. Vorrichtung nach Anspruch 1,
   **dadurch gekennzeichnet**,
   daß der optische Pfad Laserscanner (1) - Detektor (5) etwa senkrecht zum Filamentbündel (7) angeordnet ist.

## Claims

1. Device for simultaneous measurement of the position and diameters of the filaments of a filament bundle (7), a laser scanner (1) being located for illumination in front of the filament bundle (7), an optical system (3), a filter (4) a detector (5) and an evaluation device being located in the beam path behind the filament bundle (7), the filter (4) being located to blank out the proportion of light not diffused on the filaments in the focal plane of the optical system (3) and being designed as permeable only to individual orders of the diffraction image, the detector device (5) comprising a line or matrix sensor for measuring the intensity, and the evaluation device being designed to determine the positions of the filaments from the measured chronological intensity changes, and in order to determine the diameters of the individual filaments from the ratios of the measured intensities.

2. Device according to Claim 1, characterised in that the filter (4) is designed as permeable for two circular rings or circular ring sections with different radii $x_1$, $x_2$.

3. Device according to Claim 1, characterised in that the optical path between the laser scanner (1) and the detector (5) is arranged approximately perpendicularly to the filament bundle (7).

## Revendications

1. Dispositif pour la mesure simultanée des positions et des diamètres des filaments d'un faisceau de filaments (7) et dans lequel il est prévu un scanner laser (1) servant à éclairer en avant du faisceau de filaments (7), et un système optique (3), un tube (4) et un dispositif de détection (5) et d'évaluation sont disposés dans le trajet du rayonnement en arrière du faisceau de filaments (7) et le filtre (4) servant à éliminer la composante de lumière dispersée au niveau des filaments, et disposé dans le plan focal du système optique (3) et réalisé uniquement pour différents ordres de l'image de diffraction, le dispositif de détection (5) est constitué par un capteur linéaire ou un capteur matriciel pour la mesure des intensités, et le dispositif d'évaluation est agencé de manière à déterminer les positions des filaments à partir des variations mesurées de l'intensité et pour déterminer les diamètres des différents filaments à partir des rapports des intensités mesurées.

2. Dispositif selon la revendication 1, caractérisé en ce que le filtre (4) est agencé de manière à être transparent pour deux anneaux circulaires ou deux sections d'anneaux circulaires ayant des rayons $x_1$, $x_2$ différents.

3. Dispositif selon la revendication 1, caractérisé en ce que le trajet optique scanner laser (1) - détecteur (5) est disposé approximativement perpendiculaire au faisceau de filaments (7).

Fig. 1

Fig. 2

<u>fig. 3:</u>

$$\left( \int_{1}^{2} f(x)dx - \int_{-1,5}^{-2,5} f(x)dx \right) / \left( \int_{1}^{2} f(x)dx + \int_{-1,5}^{-2,5} f(x)dx \right) \quad \text{versus } b'$$

$$f(x) = \sin^2(\pi b'x/\lambda f_1)/(\pi b'x/\lambda f_1)^2$$

$$\lambda \ = \ 632,8 \ \text{nm}$$
$$f_1 \ = \ 10,0 \ \text{mm}$$
$$a \ = \ 1,0 \ \text{mm}$$
$$b \ = \ 1,0 \ \text{mm}$$
$$d \ = \ 2,5 \ \text{mm}$$

fig. 4:

$$( \int_{1}^{2} f(x)dx - \int_{-1}^{-4,5} f(x)dx ) / ( \int_{1}^{2} f(x)dx + \int_{-1}^{-4,5} f(x)dx ) \quad \text{versus b'}$$

$$f(x) = \sin^2(\pi b'x/\lambda f_1)/(\pi b'x/\lambda f_1)^2$$

$\lambda = 632,8 \text{ nm}$

$f_1 = 50,0 \text{ mm}$

$a = 1,0 \text{ mm}$

$b = 3,5 \text{ mm}$

$d = 2,0 \text{ mm}$

9

20.0mV/DIV 50.0us/DIV

CH2

CH2

Fig. 5

CH1

CH1

1    2    3    4    5 6    7    8

EP 0 439 803 B1